(19) Europäisches Patentamt / European Patent Office / Office européen des brevets

(11) **EP 2 026 263 A1**

(12) **DEMANDE DE BREVET EUROPEEN**

(43) Date de publication:
**18.02.2009 Bulletin 2009/08**

(51) Int Cl.:
***G06Q 10/00*** *(2006.01)*

(21) Numéro de dépôt: **08158305.6**

(22) Date de dépôt: **16.06.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **31.07.2007 FR 0756826**

(71) Demandeur: **Alcatel Lucent**
**75008 Paris (FR)**

(72) Inventeurs:
• **Daurensan, Véronique**
 **92160 ANTONY (FR)**
• **Girard, Jean-Jacques**
 **91220 BRÉTIGNY SUR ORGE (FR)**

(74) Mandataire: **Hervouet, Sylvie et al**
 **Feray Lenne Conseil**
 **39/41, avenue Aristide Briand**
 **92163 Anthony Cedex (FR)**

(54) **Procédé et logiciel de vérification d'agenda électronique**

(57) Procédé de vérification d'un agenda électronique (1), le module de gestion dudit agenda électronique s'exécutant sur une unité mobile (2) portée par un utilisateur (3), et ledit agenda électronique (1) comprenant des tâches (4), chaque tâche (4) comprenant un type (5), une date de début prévisionnelle (6) et une durée prévisionnelle (7), caractérisé en ce qu'il comprend, pour chaque tâche (4), les étapes suivantes :

- extraction depuis une première table historique (10), d'une durée tabulée (11), fonction de la tâche (4) ou du type (5) de la tâche (4),
- comparaison de la durée tabulée (11) avec la durée prévisionnelle (7),
- envoi d'une alerte à l'utilisateur (3) lorsque la durée prévisionnelle (7) est sensiblement plus importante que la durée tabulée (11).

FIG. 1

EP 2 026 263 A1

**Description**

La présente invention concerne la gestion d'un agenda électronique et plus particulièrement un service de vérification de la faisabilité d'un agenda prévisionnel, tant préalable qu'en temps réel.

Certains utilisateurs ont des emplois du temps très chargés avec beaucoup d'activités/tâches. Ils utilisent des logiciels d'agenda électroniques pour les aider à planifier ces tâches. Ces utilisateurs souhaiteraient savoir si une planification d'agenda prévisionnelle est faisable. Ils aimeraient connaître cette faisabilité au préalable pour les jours suivants, et de plus suivre l'évolution de cette faisabilité en temps réel en fonction des aléas survenus durant l'exécution desdites tâches.

Dans le domaine des agendas électroniques, il n'existe pas à ce jour d'outil d'analyse. L'utilisateur doit procéder lui-même à une analyse sans outil.

La présente invention remédie à cette absence en proposant un procédé de vérification d'un agenda électronique, le module de gestion dudit agenda électronique s'exécutant sur une unité mobile portée par un utilisateur, et ledit agenda électronique comprenant des tâches, chaque tâche comprenant un type, une date de début prévisionnelle et une durée prévisionnelle, le procédé comprenant, pour chaque tâche, les étapes suivantes :

- extraction depuis une première table historique, d'une durée tabulée, fonction du type de la tâche,
- comparaison de la durée tabulée avec la durée prévisionnelle,
- envoi d'une alerte à l'utilisateur lorsque la durée prévisionnelle est sensiblement plus importante que la durée tabulée.

Selon une autre caractéristique de l'invention, une tâche comprend encore une localisation de la tâche, et un moyen de transport, le procédé comprenant encore, avant l'étape de comparaison des durées, les étapes de :

- détermination d'une durée de transport,
- remplacement de la durée prévisionnelle par la somme de la durée prévisionnelle et de la durée de transport.

Selon une autre caractéristique de l'invention, l'unité mobile comporte encore un moyen de géolocalisation fournissant une localisation en cours de l'unité mobile.

Selon une autre caractéristique de l'invention, le procédé comporte encore, à la date de début prévisionnelle d'une tâche, les étapes de :

- extraction de la localisation prévisionnelle de la tâche en cours, depuis l'agenda,
- comparaison de la localisation en cours et de la localisation prévisionnelle,
- envoi d'une alerte à l'utilisateur lorsque la localisation prévisionnelle est sensiblement différente de la localisation en cours.

Selon une autre caractéristique de l'invention, le procédé comporte encore, après la date de fin prévisionnelle d'une tâche, les étapes de :

- attente d'un délai paramétrable,
- extraction de la localisation prévisionnelle de la tâche normalement terminée, depuis l'agenda,
- comparaison de la localisation en cours et de la localisation prévisionnelle,
- envoi d'une alerte à l'utilisateur lorsque la localisation prévisionnelle est sensiblement égale à la localisation en cours.

Selon une autre caractéristique de l'invention, le procédé comprend encore les étapes de :

- extraction de la date de début d'une tâche suivante,
- calcul de la durée de transport nécessaire pour se rendre de la localisation en cours à la localisation d'exécution de ladite tâche suivante,
- comparaison de la date en cours, décalée de la durée de transport nécessaire, avec la date de début de ladite tâche suivante,
- envoi d'une alerte à l'utilisateur lorsque la date en cours, décalée de la durée de transport nécessaire est postérieure à la date de début de ladite tâche suivante, d'au moins la durée d'une marge de sécurité paramétrable.

Selon une autre caractéristique de l'invention, l'envoi d'une alerte est effectué au moyen d'un média paramétrable.

Selon une autre caractéristique de l'invention, les tables historiques sont mises à jour en fonction de la durée effective d'exécution d'une tâche ou d'un transport, à l'issue de ladite tâche ou dudit transport.

L'invention concerne encore un logiciel d'agenda électronique implémentant le procédé selon l'un quelconque des modes de réalisation précédents.

Un avantage du procédé selon l'invention est de permettre à tout moment de vérifier la faisabilité d'un agenda prévisionnel tant au préalable qu'en temps réel durant l'exécution des tâches.

L'invention utilise avantageusement une horloge, un moyen de géolocalisation, différentes informations (cartographie, horaires de transport, conditions de trafic, ...) pour venir enrichir l'agenda et le préciser en temps réel.

Un autre avantage de l'invention, de par l'utilisation de tables historiques remises à jour en fonction du réalisé, est de connaître les habitudes de l'utilisateur, et d'offrir ainsi une personnalisation automatique.

D'autres caractéristiques, détails et avantages de l'invention ressortiront plus clairement de la description détaillée donnée ci-après à titre indicatif en relation avec des dessins sur lesquels :

- la figure 1 présente un schéma contextuel de l'invention,
- la figure 2 illustre un exemple de table historique.

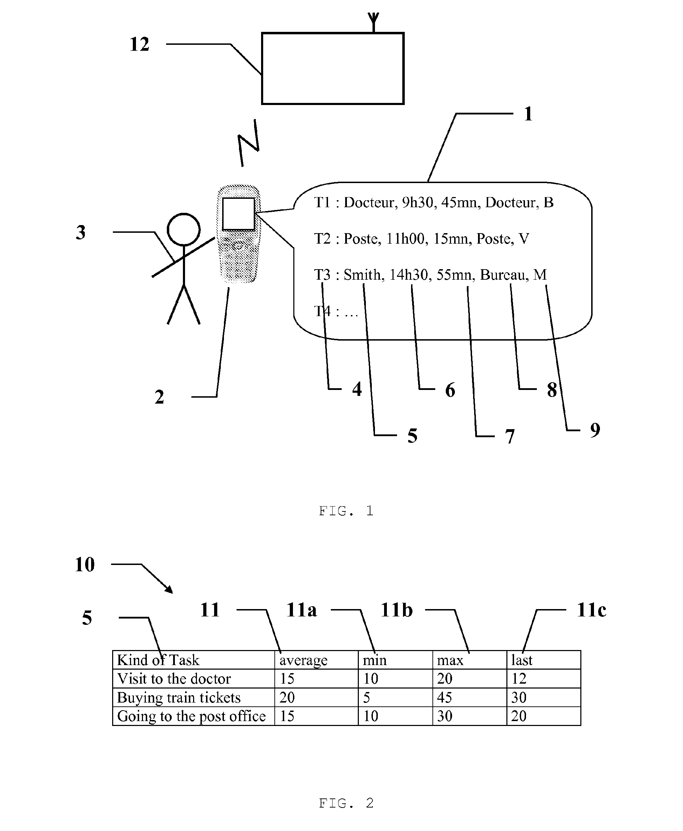

Selon la figure 1, qui figure l'environnement de l'invention, un utilisateur 3 est porteur d'une unité mobile 2. Cette unité mobile 2 est apte à exécuter un logiciel de gestion d'agenda électronique et peut être un téléphone portable, un assistant personnel (PDA), un ordinateur portable ou tout dispositif mobile équivalent. Ledit agenda électronique 1 est une base de données comprenant des tâches 4. Ces tâches 4 ont été préalablement renseignées, par l'utilisateur 3 par tout moyen connu de l'homme de l'art, en fonction des activités qu'il prévoit d'exécuter. L'unité mobile 2 dispose par exemple d'une interface homme machine permettant d'éditer (modifier / consulter) les tâches 4 de l'agenda électronique 1. Un tel agenda électronique 1 peut être visualisé sur l'écran de l'unité mobile 2, tel qu'agrandi 1 à la figure 1. La figure 1 illustre un agenda 1 comprenant quatre tâches T1-T4 figurées chacune par des paramètres ici disposés en ligne. Chaque tâche 4 est définie par des paramètres comprenant au moins : un type 5 (Docteur, Poste, Smith, ...), une date de début prévisionnelle 6, et une durée prévisionnelle 7. D'autres paramètres sont possibles, et la suite de la description en propose d'autres.

L'agenda électronique 1 est renseigné de manière classique. L'idée de l'invention est de proposer à l'utilisateur 3 un service de vérification utilisable à la demande ou surveillant en permanence l'agenda 1 et son évolution, et alertant l'utilisateur 3 lorsque des problèmes surgissent : retard, chevauchement de deux tâches, impossibilité d'être à l'heure à un rendez-vous, ...

Ce service fonctionne selon plusieurs modalités. Une première vérification peut être réalisée à priori pour les jours à venir en vérifiant que les prévisions de tâches sont réalisables au regard des durées effectivement employées pour réaliser les mêmes tâches par le passé. Ensuite ce service surveille, en temps réel, l'exécution desdites tâches 4 et notamment, au moyen d'une géolocalisation, vérifie que l'utilisateur 3 est "dans les temps", en phase avec son agenda 1 prévisionnel.

Un tel service est un module logiciel, partie d'un logiciel de gestion d'agenda électronique. A ce titre, il peut être implanté localement sur l'unité mobile 2, à distance sur un serveur 12, avec lequel l'unité mobile 2 est en communication, ou encore partiellement localement et partiellement à distance.

Pour vérifier un agenda électronique 1, le procédé selon l'invention met en oeuvre une première table historique 10, dont un exemple est représenté à la figure 2, contenant les valeurs, notamment de durée, employées par le passé, par l'utilisateur 3, pour effectivement réaliser la même tâche 4. Le procédé selon l'invention réalise alors les étapes suivantes.

Pour une tâche 4 à vérifier, la table historique 10 est consultée pour en extraire une durée tabulée 11. Cette durée tabulée 11, pour une tâche 4 donnée, est extraite de la table historique 10 en fonction de la tâche 4. Ainsi un "rendez vous chez le docteur" (visit to the doctor) est une tâche 4 présente dans la table historique 10. La table historique 10 contient alors une durée tabulée 11 correspondante, indexée en fonction de la tâche, qui peut être extraite.

Pour une tâche 4 ne disposant pas d'entrée dans la table historique, il est possible d'utiliser le type 5 de la tâche 4. La table historique comprenant alors une durée tabulée 11 pour chaque type de tâche. Le type 5 est alors un moyen d'organiser les tâches en fonction des similitudes de leurs caractéristiques temporelles. Pour une tâche jamais réalisée, pour laquelle il n'existe pas d'historique, il est encore possible d'attribuer une durée tabulée 11 par défaut. Le but est dans tous les cas d'obtenir une estimation la plus juste possible, basée sur les durées constatées lors d'exécution précédentes de tâches 4 identiques, similaires ou approchantes par le même utilisateur 3.

Dans une étape suivante, la durée tabulée 11 ainsi extraite de la table historique 10, est comparée avec la durée prévisionnelle 7, issue de l'enregistrement de la tâche 4 dans l'agenda électronique 1.

Lorsque la durée prévisionnelle 7 est "trop" importante relativement à la durée tabulée 11, une alerte peut être envoyée à l'utilisateur 3 afin de le prévenir d'un éventuel problème de faisabilité de cette tâche 4, ici un risque de débordement de ladite tâche 4, qui risque de durer plus que prévue, avec un risque de retard et le cas échéant de chevauchement avec une tâche ultérieure.

La mesure de ce "trop" est avantageusement paramétrable. Ce paramétrage, par exemple défini par l'utilisateur 3, peut être indiqué sous forme d'une durée. Cette durée $T_{sen}$ est alors telle qu'une alerte est envoyée lorsque :

$$T_{prév} - T_{tab} > T_{sen},$$

avec $T_{prév}$ : durée prévisionnelle 7,
$T_{tab}$ : durée tabulée 11
$T_{sen}$ : durée paramétrable de sensibilité.

Selon un mode de réalisation alternatif, ce paramétrage est indiqué sous forme d'un pourcentage P, compris entre 0 et 1. Une alerte est alors envoyée lorsque $(T_{prév} / T_{tab})$ - 1 > P.

La durée nécessaire à l'exécution d'une tâche 4 peut dépendre de plusieurs facteurs. Un facteur important est la date/heure de réalisation. Ainsi la tâche "aller à la poste" (going to the post office) voit sa durée varier sensiblement, selon qu'elle est réalisée le matin vers 10h ou le soir vers 17h, ou encore un jour de semaine ou le samedi, en fonction de l'affluence. La table historique 10 d'une telle tâche 4 est alors avantageusement renseignée et indexée en fonction de l'heure et/ou du jour d'exécution de la tâche 4. Ladite date peut être la date de début prévisionnelle 6 fournie par l'agenda 1, ou encore si l'exécution de la tâche connaît un retard, la date effective d'exécution, déterminée par l'horloge classiquement présente sur l'unité mobile 2, le cas échéant en conjonction avec un moyen de géolocalisation, comme il sera décrit plus loin.

L'utilisateur 3 renseigne le plus souvent les parties "utiles" des tâches 4 de son agenda 1. Selon un mode de réalisation avantageux, une tâche 4 comprend encore une localisation 8 de la tâche 4, indiquant le lieu où ladite tâche 4 doit être exécutée, et un moyen de transport 9 envisagé pour effectuer le transport vers cette localisation 8 depuis la localisation de la tâche précédente. Ceci permet au procédé selon l'invention de déterminer une durée de transport pour atteindre la localisation d'une tâche 4 en provenance de la localisation de la tâche précédente. Ce temps est bien entendu nul si deux tâches successives se déroulent au même endroit. Le procédé est ainsi à même de compléter les parties "utiles" des tâches, en incluant automatiquement des tâches de transport associées.

Le procédé utilise alors le temps de transport pour augmenter d'autant la durée prévisionnelle 7 de la tâche 4. La tâche est alors complétée de son transport associé. La durée prévisionnelle 7 étant prise égale à la durée prévisionnelle 7 de la tâche proprement dite issu de l'agenda 1, augmentée de la durée de transport automatiquement calculée.

Le moyen de transport 9 peut être choisi, par exemple, parmi : Bus B, Voiture V, Marche M, ... Le moyen peut encore être précisé selon la vitesse envisagée. Ainsi on peut distinguer Marche1, pour une marche lente, ou Marche2 pour une marche rapide en utilisant plusieurs moyens de transport ou alternativement ne considérer qu'un unique moyen Marche et ajouter un paramètre supplémentaire de vitesse dans la définition de tâche.

La détermination de la durée de transport s'effectue automatiquement. Pour cela, selon les cas, le procédé utilise des méthodes analytiques et/ou historiques. Le procédé accède directement ou via le réseau à des ressources telles que cartographie, horaires de moyens de transport, vitesse de transport, informations de trafic routier, afin de déterminer, fonction de la distance à parcourir entre la localisation d'une tâche 4 et la localisation de la tâche précédente, une vitesse moyenne ou une durée de déplacement. De manière analytique la cartographie permet de déterminer la distance à parcourir. Si la voiture est le moyen de transport sélectionné, la vitesse moyenne peut encore être déterminée par la cartographie, en fonction de l'itinéraire retenu. Les informations de trafic permettent de choisir/modifier un itinéraire ou encore de corriger la vitesse moyenne. De manière historique, une seconde table historique peut être utilisée pour conserver les durées de transport, effectivement réalisées, pour des transports identiques (même itinéraire, même moyen de transport 9) ou similaires. Comme pour la première table historique 10, l'heure de réalisation du transport peut être utilisée pour d'indexer la seconde table historique. Il est encore possible de panacher les méthodes analytiques/historiques. Ainsi par exemple un itinéraire routier et la distance à parcourir sont déterminés par analyse de la cartographie, tandis que la vitesse moyenne est extraite d'une table historique fonction de l'heure et du lieu. Une information comme un temps moyen pour trouver une place et parquer un véhicule peut aussi être utilisée et faire l'objet d'une table historique dédiée.

La vérification/suivi du déroulement de l'agenda 1 en temps réel nécessite de savoir déterminer l'avancement des tâches. L'unité mobile 2 dispose généralement d'une horloge. Il est ainsi possible de comparer l'heure courant avec les dates de début prévisionnelles 6 ou les dates de fin prévisionnelles des tâches 4 de l'agenda 1. On note qu'une date de fin (prévisionnelle) est déterminée, si besoin, en ajoutant une durée (prévisionnelle) à une date de début (prévisionnelle). L'heure n'est cependant pas suffisante pour connaître l'avancement d'une tâche 4.

Il est possible de demander à l'utilisateur 3 de renseigner certains indicateurs d'avancement. Par exemple l'utilisateur peut valider le début ou la terminaison effectifs d'une tâche 4, en saisissant manuellement cette information. Ceci en plus d'être fastidieux ne fournit que peu d'information au logiciel.

Selon une caractéristique importante de l'invention, le procédé utilise avantageusement un service de géolocalisation. Un tel service est le plus souvent disponible sur les unités mobiles 2 telles qu'envisagés. Un tel service est par exemple basé sur la norme GPRS ou encore sur le système GPS, pour ne citer que les principaux.

Le procédé utilise ce service de géolocalisation pour mesurer une localisation en cours de l'unité mobile 2. Cette unité mobile 2 étant individuelle et supposée portée en permanence par l'utilisateur 3, hypothèse peut être prise que la localisation ainsi mesurée est la localisation en cours et en temps réel de l'utilisateur 3 lui-même.

La comparaison de la localisation en cours avec la localisation prévisionnelle 8 indiquée par l'agenda électronique 1, en fonction du temps, permet de déterminer, automatiquement, des indicateurs d'avancement tels que tâche débutée, tâche terminée, tâche en retard, etc.

Ainsi pour une tâche 4 normalement en cours, telle que déterminée en fonction de l'heure en cours et de l'agenda 1, la comparaison de la localisation prévisionnelle 8, extraite par le procédé de l'agenda 1, et de la localisation en cours telle que mesurée par ledit moyen de géolocalisation, est instructive. Cette comparaison, avantageusement effectuée à la date de début prévisionnelle 6 de ladite tâche 4, va permettre de vérifier que l'utilisateur 3 est présent à la localisation d'exécution de ladite tâche 4 et est spatialement en mesure de réaliser ladite tâche 4. Une différence sensible entre la localisation prévisionnelle 8 d'une tâche 4 à sa date de début prévisionnelle 6, et la localisation en cours est indicative d'un retard. La détection d'une telle condition est avantageusement suivie d'un envoi d'une alerte à l'utilisateur 3. Ladite alerte est avantageusement circonstanciée avec tous les éléments ayant conduit au déclenchement de l'alerte.

De même à la fin prévisionnelle d'une tâche 4, le fait de rester à la même localisation, lorsque la tâche 4 suivante indique une localisation 8 différente, et qu'un transport devrait être réalisé, peut être indicatif d'un retard dans la terminaison de ladite tâche 4. Afin de détecter une telle condition pour une tâche 4 dont la date de fin prévisionnelle est passée, le procédé réalise les étapes suivantes. La localisation prévisionnelle 8 de la tâche 4, dont la date prévisionnelle de fin est passée et qui devrait donc être normalement terminée, est extraite de l'agenda 1. Cette date est ensuite comparée à la localisation en cours. Si ces deux localisations sont sensiblement égales, ceci est indicatif d'une condition anormale et une alerte circonstanciée est avantageusement envoyée à l'utilisateur 3. Afin d'éviter des alertes trop nombreuses ou intempestives, le procédé attend avantageusement un certain délai, paramétrable, avant de procéder à la détection de cette condition.

Dans les détections des deux conditions précédentes, la sensibilité de la mesure de la différence, respectivement de l'égalité, des localisations est paramétrable. Ce paramétrage peut être indiqué par une distance absolue ou un pourcentage de distance.

De manière équivalente, le procédé est, comme vu précédemment, apte à calculer une durée de transport. Une distance séparant deux localisations, le moyen de transport 9 étant connu, est équivalente à une durée. Il est ainsi possible de paramétrer la condition précédente directement sous forme d'une durée, ici de retard. Cette durée peut être exprimée en absolu ou au moyen d'un pourcentage.

En tenant compte de la durée de transport pour se rendre de la localisation actuelle à la localisation prévisionnelle 8 de la tâche suivant la tâche 4 en cours, il est possible de déterminer une date de fin au plus tard d'une tâche 4. Le procédé, en comparant cette date avec la date de début 6 de la tâche suivante est capable de détecter une nouvelle condition, ici de chevauchement de taches successives. Pour cela le procédé extrait la date de début prévisionnelle 6 d'une tâche 4 suivante, ou successeur de la tâche en cours. Il calcule ensuite la durée de transport nécessaire pour se rendre de la localisation en cours à la localisation 8 de ladite tâche 4 suivante. Il compare ensuite la date en cours, décalée de la durée de transport nécessaire, avec la date de début prévisionnelle 6 de ladite tâche suivante. Une alerte est envoyée à l'utilisateur 3 lorsque la date en cours, décalée de la durée de transport nécessaire est postérieure à la date de début prévisionnelle 6 de ladite tâche suivante, d'au moins la durée d'une marge de sécurité paramétrable. La marge de sécurité est une durée prévue pour être ajoutée à la durée de transport, en cas d'aléa.

Il a été envisagé précédemment l'envoi de diverses alertes pour signaler à l'utilisateur 3 une condition de défaut, de non faisabilité, d'impossibilité, ou encore de risque imminent de survenance d'une telle condition. Toutes ces alertes peuvent être envoyées au moyen d'un média disponible sur l'unité mobile 2. Il peut s'agir au choix, de SMS, MMS, appel vocal, courriel ou équivalent. Le choix du ou des médias est paramétrable.

Ce paramétrage peut être global, par type d'alerte ou fonction de l'heure/jour.

Avantageusement, ce paramétrage peut encore être fonction d'un état de disponibilité de l'utilisateur 3. Il est ainsi possible de privilégier les médias silencieux (SMS, MMS) lorsque l'utilisateur 3 est indisponible, et de réserver les médias moins silencieux (appel vocal) lorsque l'utilisateur 3 est disponible. Un appel vocal peut ainsi être synthétisé automatiquement pour contenir toutes les informations pertinentes relatives à une alerte.

Avantageusement, l'état de disponibilité de l'utilisateur 3 peut être compris comme un paramètre supplémentaire parmi ceux définissant une tâche 4 dans l'agenda électronique 1, ou alternativement peut être déduit de l'analyse de la tâche 4 ou de son type 5. Ainsi, par exemple, lorsque la tâche 4 en cours est une tâche "réunion", l'utilisateur 3 est considéré comme indisponible.

Selon une autre caractéristique importante de l'invention, les tables historiques 10 sont mises à jour en fonction de la durée effective d'exécution d'une tâche 4 ou d'un transport, à l'issue de ladite tâche 4 ou dudit transport.

L'issue d'une tâche ou d'un transport peut être déterminée comme vu précédemment sur information de l'utilisateur 3, ou encore en observant l'évolution de la localisation en cours en temps réel. Ainsi lorsque la localisation prévisionnelle 8 est modifiée entre une tâche précédente et une tâche suivante, comme indiqué par l'agenda 1, la surveillance de la localisation en cours aux environs de la date de fin de la tache précédente et de la date de début de la tâche suivante est instructive. La comparaison avec les localisations prévisionnelles de la tache précédente et de la tache suivante permet de préciser les dates effectives. Ainsi, la date où la localisation en cours commence à sensiblement différer de la localisation prévisionnelle de la tache précédente est la date effective de fin de la tache précédente, et la date de début du transport. De même, la date où la localisation en cours devient sensiblement égale à la localisation prévisionnelle de la tache suivante est la date effective de fin de transport, et la date de début de la tache suivante. Sur ce principe, il est possible de déterminer, par différence entre ces dates, les durées effectives des tâches et des transports et ainsi de compléter ou mettre à jour les tables historiques 10 contenant les durées des tâches et/ou des transports.

Les tables historiques 10 peuvent encore être modifiées manuellement par l'utilisateur 3.

Il n'a été décrit jusqu'ici, qu'une seule durée dans les tables historiques. Il est encore possible de préciser les données de telles tables historiques 10 en considérant pour chaque entrée, non seulement une valeur 11 de durée "moyenne" (average), mais encore une seconde valeur 11a de durée "minimale" (min) et une troisième valeur 11b de durée "maximale" (max). Ces différentes valeurs sont renseignées par observation des durées effectivement réalisées.

Afin, le cas échéant, de détecter un changement de tendance, il est encore possible de considérer, dans une table historique 10, une quatrième valeur 11c de durée "dernière" (last), correspondant à la durée effective de la tâche 4 lors de sa dernière exécution.

Ces différentes valeurs permettent de qualifier une condition ou une alerte, en considérant des durées au plus tôt, moyennes ou au plus tard. Ainsi, par exemple, une échelle de qualification des hypothèses de planification d'un agenda, peut être définie avec les valeurs suivantes :

- "très optimiste" si une durée prévisionnelle 7 est inférieure à la durée minimale 11a,
- "optimiste" si une durée prévisionnelle 7 est inférieure à la durée moyenne 11,
- "pessimiste" si une durée prévisionnelle 7 est supérieure à la durée moyenne 11,
- "très pessimiste" si une durée prévisionnelle 7 est supérieure à la durée maximale 11b.

Une telle échelle peut encore déterminer du choix d'envoyer ou non une alerte. Ainsi par exemple une alerte sera envoyée pour une condition "très optimiste" ou "très pessimiste", mais pas pour une condition simplement "optimiste" ou "pessimiste". De même une alerte envoyée pourra ainsi être qualifiée afin de prévenir l'utilisateur 3 de l'urgence à réagir en fonction d'une alerte optimiste ou pessimiste.

**Revendications**

1. Procédé de vérification d'un agenda électronique (1), le module de gestion dudit agenda électronique s'exécutant sur une unité mobile (2) portée par un utilisateur (3), et ledit agenda électronique (1) comprenant des tâches (4), chaque tâche (4) comprenant un type (5), une date de début prévisionnelle (6) et une durée prévisionnelle (7), **caractérisé en ce qu'**il comprend, pour chaque tâche (4), les étapes suivantes :

- extraction depuis une première table historique (10), d'une durée tabulée (11), fonction de la tâche (4) ou du type (5) de la tâche (4),
- comparaison de la durée tabulée (11) avec la durée prévisionnelle (7),
- envoi d'une alerte à l'utilisateur (3) lorsque la durée prévisionnelle (7) est sensiblement plus importante que la durée tabulée (11).

2. Procédé selon la revendication 1, où la sensibilité de l'importance de la durée prévisionnelle (7) par rapport à la durée tabulée (11) est paramétrable en durée ou en pourcentage.

3. Procédé selon la revendication 1 ou 2, où la durée tabulée (11) est encore tabulée en fonction de la date de début de la tâche (4).

4. Procédé selon l'une des revendications 1 à 3, où une tâche (4) comprend encore une localisation (8) de la tâche, et un moyen de transport (9), où le procédé comprend encore, avant l'étape de comparaison des durées, les étapes de :

- détermination d'une durée de transport,
- remplacement de la durée prévisionnelle (7) par la somme de la durée prévisionnelle et de la durée de transport.

**5.** Procédé selon la revendication 4, où la détermination de la durée de transport utilise, le cas échéant : une cartographie, des horaires de moyens de transport, un temps moyen de parcage de véhicule, des informations de trafic routier, une vitesse de transport, une seconde table historique.

**6.** Procédé selon l'une quelconque des revendications précédentes, où l'unité mobile (2) comporte encore un moyen de géolocalisation fournissant une localisation de l'unité mobile (2), et où le procédé comporte encore une étape de :

- mesure de la localisation en cours au moyen dudit moyen de géo localisation.

**7.** Procédé selon la revendication 6, où le procédé comporte encore, à la date de début prévisionnelle (6) d'une tâche (4), les étapes de :

- extraction de la localisation prévisionnelle (8) de la tâche en cours, depuis l'agenda (1),
- comparaison de la localisation en cours et de la localisation prévisionnelle (8),
- envoi d'une alerte à l'utilisateur (3) lorsque la localisation prévisionnelle (8) est sensiblement différente de la localisation en cours.

**8.** Procédé selon la revendication 6 ou 7, où le procédé comporte encore, après la date de fin d'une tâche (4), les étapes de :

- attente d'un délai paramétrable,
- extraction de la localisation prévisionnelle (8) de la tâche normalement terminée, depuis l'agenda (1),
- comparaison de la localisation en cours et de la localisation prévisionnelle (8),
- envoi d'une alerte à l'utilisateur (3) lorsque la localisation prévisionnelle (8) est sensiblement égale à la localisation en cours.

**9.** Procédé selon la revendication 7 ou 8, où la sensibilité de la différence/égalité entre la localisation prévisionnelle (8) et la localisation en cours est paramétrable en distance, en durée ou en pourcentage.

**10.** Procédé selon l'une quelconque des revendications 6 à 9, où le procédé comprend encore les étapes de :

- extraction de la date de début prévisionnelle (6) d'une tâche (4) suivante,
- calcul de la durée de transport nécessaire pour se rendre de la localisation en cours à la localisation (8) de ladite tâche (4) suivante,
- comparaison de la date en cours, décalée de la durée de transport nécessaire, avec la date de début prévisionnelle (6) de ladite tâche suivante,
- envoi d'une alerte à l'utilisateur (3) lorsque la date en cours, décalée de la durée de transport nécessaire est postérieure à la date de début prévisionnelle (6) de ladite tâche suivante, d'au moins la durée d'une marge de sécurité paramétrable.

**11.** Procédé selon l'une quelconque des revendications précédentes, où l'envoi d'une alerte est effectuée au moyen d'un média paramétrable.

**12.** Procédé selon la revendication 11, où le paramétrage du média dépend encore d'un état de disponibilité de l'utilisateur (3).

**13.** Procédé selon la revendication 12, où l'état de disponibilité de l'utilisateur (3) est compris dans les tâches (4) de l'agenda (1), ou peut en être extrait.

**14.** Procédé selon l'une quelconque des revendications précédentes, où les tables historiques (10) sont mises à jour en fonction de la durée effective d'exécution d'une tâche (4) ou d'un transport, à l'issue de ladite tâche (4) ou dudit transport.

**15.** Procédé selon la revendication 14, où ladite issue est déterminée par l'évolution de la localisation en cours.

**16.** Procédé selon l'une quelconque des revendications précédentes, où les tables historiques (10) sont modifiées manuellement par l'utilisateur (3).

**17.** Procédé selon l'une quelconque des revendications précédentes, où chaque entrée d'une table historique (10) comporte : une première valeur (11) de durée "moyenne", une seconde valeur (11a) de durée "minimale" et une troisième valeur (11b) de durée "maximale".

**18.** Procédé selon la revendication 17, où chaque entrée d'une table historique comporte encore : une quatrième valeur (11c) de durée "dernière", correspondant à la durée effective de la tâche (4) lors de sa dernière exécution.

**19.** Procédé selon la revendication 17 ou 18, où le procédé qualifie une alerte et/ou choisit d'envoyer une alerte selon l'échelle suivante :

- "très optimiste" si une durée prévisionnelle est inférieure à la durée minimale (11a),
- "optimiste" si une durée prévisionnelle est inférieure à la durée moyenne (11),
- "pessimiste" si une durée prévisionnelle est supérieure à la durée moyenne (11),
- "très pessimiste" si une durée prévisionnelle est supérieure à la durée maximale (11b).

**20.** Logiciel d'agenda électronique implémentant le procédé selon l'une quelconque des revendications précédentes.

**12**

**1**

T1 : Docteur, 9h30, 45mn, Docteur, B

T2 : Poste, 11h00, 15mn, Poste, V

T3 : Smith, 14h30, 55mn, Bureau, M

T4 : ...

**3**

**2**

**4**   **6**   **8**

**5**   **7**   **9**

FIG. 1

**10**

**5**   **11**   **11a**   **11b**   **11c**

| Kind of Task | average | min | max | last |
|---|---|---|---|---|
| Visit to the doctor | 15 | 10 | 20 | 12 |
| Buying train tickets | 20 | 5 | 45 | 30 |
| Going to the post office | 15 | 10 | 30 | 20 |

FIG. 2

Europäisches
Patentamt

European
Patent Office

Office européen
des brevets

# RAPPORT DE RECHERCHE EUROPEENNE

Numéro de la demande

EP 08 15 8305

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 441 300 A (AVAYA TECHNOLOGY CORP [US]) 28 juillet 2004 (2004-07-28) <br> * abrégé * <br> * colonne 1, ligne 6 - ligne 19 * <br> * colonne 1, ligne 30 - ligne 41 * <br> * colonne 2, ligne 6 - ligne 13 * <br> * colonne 3, ligne 10 - ligne 20 * <br> * colonne 5, ligne 23 - colonne 6, ligne 55 * <br> ----- | 1-20 | INV. <br> G06Q10/00 |
| X | US 5 938 721 A (DUSSELL WILLIAM O [US] ET AL) 17 août 1999 (1999-08-17) <br> * abrégé * <br> * colonne 1, ligne 5 - ligne 8 * <br> * colonne 2, ligne 1 - ligne 7 * <br> * colonne 3, ligne 40 - ligne 51 * <br> * colonne 4, ligne 56 - ligne 58 * <br> * colonne 6, ligne 13 - ligne 18 * <br> * colonne 7, ligne 16 - ligne 32 * <br> * colonne 8, ligne 27 - ligne 51 * <br> * colonne 9, ligne 3 - ligne 15 * <br> ----- | 1-20 | |
| X | WO 03/107129 A (GP WARE [US]) 24 décembre 2003 (2003-12-24) <br> * abrégé * <br> * page 2, ligne 6 - page 3, ligne 3 * <br> * page 5, ligne 38 - ligne 39 * <br> * page 6, ligne 19 - page 7, ligne 16 * <br> * page 7, ligne 37 - page 8, ligne 17 * <br> * page 8, ligne 35 - page 9, ligne 33 * <br> ----- | 1-20 | **DOMAINES TECHNIQUES RECHERCHES (IPC)** <br> G06Q |

Le présent rapport a été établi pour toutes les revendications

| Lieu de la recherche | Date d'achèvement de la recherche | Examinateur |
|---|---|---|
| La Haye | 7 novembre 2008 | Nicoli, Félix |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**EP 2 026 263 A1**

**ANNEXE AU RAPPORT DE RECHERCHE EUROPEENNE
RELATIF A LA DEMANDE DE BREVET EUROPEEN NO.**

EP 08 15 8305

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-11-2008

| Document brevet cité au rapport de recherche | | Date de publication | Membre(s) de la famille de brevet(s) | | Date de publication |
|---|---|---|---|---|---|
| EP 1441300 | A | 28-07-2004 | CA | 2454966 A1 | 23-07-2004 |
| | | | KR | 20040067948 A | 30-07-2004 |
| | | | US | 2004230685 A1 | 18-11-2004 |
| US 5938721 | A | 17-08-1999 | AUCUN | | |
| WO 03107129 | A | 24-12-2003 | AU | 2003236513 A1 | 31-12-2003 |

EPO FORM P0460

Pour tout renseignement concernant cette annexe : voir Journal Officiel de l'Office européen des brevets, No.12/82